# EUROPEAN PATENT SPECIFICATION

(11) **EP 2 631 983 B1**
(45) Date of publication and mention of the grant of the patent: **13.12.2017**
(21) Application number: 13152499.3
(22) Date of filing: 24.01.2013
(51) Int. Cl.: H01M 10/42, H01M 10/6561, H01M 10/613, H01M 2/14, H01M 2/10, H01M 10/6563

(54) **Battery unit**
Batterieeinheit
Unité de batterie

(30) Priority: 22.02.2012 JP 2012036568
(43) Date of publication of application: 28.08.2013
(73) Proprietor: Kabushiki Kaisha Toshiba, Minato-ku, Tokyo 105-8001 (JP)
(72) Inventor: Endo, Tamotsu, Tokyo 105-8001 (JP); Nakamura, Kohta, Tokyo 105-8001 (JP)
(74) Representative: Awapatent AB

(56) References cited:
- WO-A1-00/30190
- CA-A1- 2 763 070
- US-A1- 2005 269 995
- US-A1- 2008 213 652
- US-B1- 6 482 541

## Description

### FIELD

Exemplary embodiments described herein relate to a battery unit.

### BACKGROUND

Recently, in order to increase efficiency of power use, a demand for a battery unit mounted with a plurality of battery modules including rechargeable battery cells has increased. Generally, the battery module is mounted in a battery unit in a state in which the battery module is received in a metallic receiving tray (metal frame). The battery unit includes a guide that positions the receiving tray and is supported from below, at the time of the mounting of the metal frame. The metal frame is configured to be inserted into the battery unit and drawn from the battery unit along the guide.

Meanwhile, generally, the battery cell is configured so that an aluminum case in which an electrolytic solution is disposed therein is covered with an insulating cover and an electrode is mounted thereon. The battery module is provided with a plurality of batteries in which the electrodes of the battery cell are connected with each other by a bus bar. One surface of the battery module is disposed with a CMU substrate, covered with the case of an insulating material, and connected with an electrode terminal of the battery module. In order to prevent the electrolytic solution from being leaked from the battery cell, the battery unit is arranged with the battery module with the electrode side of the battery cell up. Generally, heat of the battery module is mostly radiated from a surface that is an opposite side to the electrode side of the battery cell.

Heat is radiated from the aluminum case of the battery cell and in the battery module, a surface on which the bus bar or the CMU substrate are disposed has high thermal resistance and therefore, is harder to emit heat than other surfaces.

US6482541 discloses a frame assembly for receiving and supporting batteries in at least one horizontal row comprises a pair of generally parallel spaced apart, aligned base supports.

US2005269995 discloses a battery pack assembly, comprising: a plurality of battery cells, the plurality of battery cells being connected in series; an enclosure enclosing the plurality of battery cells; at least one air input and at least one air output in the enclosure; and a fan positioned in at least one of the at least one air input and at least one air output.

WO0030190 discloses a battery system including a plurality of lead-acid cells. The system comprises a vertically upstanding cell support frame inclusive of a plurality of means for individually vertically supporting at least one lead-acid cells, at least two vertically upstanding members having receptacle means formed for jointly slidably receiving and retaining a plurality of cell vertical support means, and manually assemblable means for connectingly maintaining said upstanding members in spaced positional relationship one to another for receipt of said cell support means.

US2008213652 discloses a process of controlling the temperature of a battery pack includes the steps of determining the operating mode and present temperature of the battery pack.

CA2763070 discloses an instrument connection type unit pack combined cell cartridge assembled into a compound cell interconnection mesh, and a combined cartridge electricity storage device assembled into a compound unit interconnection mesh in which a plurality of cell cartridges are electrically interconnected.

### SUMMARY OF THE INVENTION

An object of the present invention is to provide a battery unit capable of efficiently cooling the battery module.

### BRIEF DESCRIPTION OF THE DRAWINGS

FIG. 1 is a perspective view schematically illustrating a battery module according to a first embodiment of the present invention;
FIG. 2 is a perspective view schematically illustrating a battery cell according to the first embodiment of the present invention;
FIG. 3 is a front view of a battery unit according to the first embodiment of the present invention;
FIG. 4 is a diagram schematically illustrating the battery module and a tray according to the first embodiment of the present invention;
FIG. 5 is an enlarged front view of the battery module mounted in the battery unit according to the first embodiment of the present invention;
FIG. 6 is a front view of a modification of the battery unit according to the first embodiment of the present invention;
FIG. 7 is a front view of the modification of the battery unit according to the first embodiment of the present invention;
FIG. 8 is a perspective view schematically illustrating the modification of the battery module according to the first embodiment of the present invention; and
FIG. 9 is a front view of a battery unit according to a second embodiment of the present invention.

### DETAILED DESCRIPTION

In general, according to one embodiment, there is provided a battery unit as defined in clam 1, the battery unit including: battery modules that include battery cells having electrodes, and a first case having a first surface and a second surface facing the first surface, the battery cell being received in the first case so that the electrode faces the first surface; and a second chassis having a plurality of recesses that is formed by disposing a pair of support members in parallel along one direction at a predetermined distance.

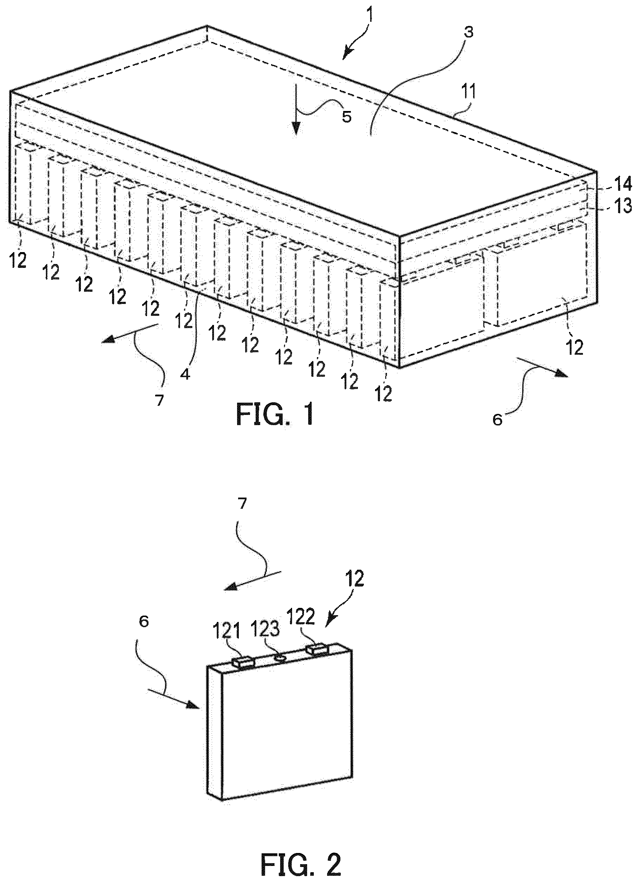

Hereinafter, embodiments of the present invention will be described in detail with reference to the accompanying drawings. FIG. 1 is a perspective view schematically illustrating a battery module 1 according to a first embodiment of the present invention. The battery module 1 includes a case 11, a plurality of battery cells 12, a plurality of bus bars 13, and a cell management unit (CMU) substrate (control substrate) 14. The case 11 is made of plastic, by way of example. The case 11 is an approximately rectangular parallelepiped box type. The case 11 receives a plurality of battery cells 12, a plurality of bus bars 13, and a CMU substrate 14 that are sequentially aligned in a first direction 5. The case 11 protects the bus bars 13 and the CMU substrate 14 from an external environment.

Further, according to the first embodiment of the present invention, in the first direction 5, an outer surface of the case 11 approaching the CMU substrate 14 is referred to as a first surface 3. In addition, in the first direction 5, the outer surface of the case 11 approaching the battery cell 12 is referred to as a second surface 4. Further, in the first embodiment of the present invention, one direction (short direction of FIG. 2) of the case 11 that is orthogonal to the first direction 5 is referred to as a second direction 6. Further, another direction (longer direction of FIG. 2) of the case 11 that is orthogonal to the first direction 5 is referred to as a third direction 7. According to the first embodiment of the present invention, the battery module 1 as described below is mounted (disposed) in the battery unit 2 so that a surface of the case 11 including the first direction 5 and the second direction 6 faces up (hereinafter, referred to as a vertical direction). Therefore, when the battery module 1 is mounted in the battery unit 2, the first direction 5 and the second direction 6 in the case 11 correspond to a direction (hereinafter, referred to as a horizontal direction) orthogonal to the height direction and the third direction 7 in the case 11 corresponds to the height direction. In addition, in the first embodiment, the case 11 having a shape in which a width of the third direction 7 is shorter than a width of the second direction 6 is described by way of example, and vice versa.

Next, a configuration of the battery cell 12 will be described. FIG. 2 is a perspective view schematically illustrating a battery cell 12 according to a first embodiment of the present invention. The battery cell 12 is a rechargeable battery. The battery cell 12 is an approximately rectangular parallelepiped box type. The inside of the battery cell 12 is charged with an electrolytic solution. The battery cell 12 includes an electrode (cathode) 121, an electrode (anode) 122, and a valve 123 for controlling pressure within the battery cell 12. The electrode (cathode) 121, the electrode (anode) 122, and the valve 123 are disposed on the same surface of the battery cell 12. The electrode (cathode) 121 and the battery (anode) 122 are disposed along a longitudinal direction by way of example. Further, the electrode (cathode) 121, the electrode (anode) 122, and the valve 123 have a structure to easily leak the electrolytic solution in the vicinity thereof.

The battery cell 12 is disposed in the battery module 1 so that a surface on which the electrode (cathode) 121, the electrode (anode) 122, and the valve 123 are disposed is disposed on the first surface 3 of the first case 11. Therefore, the surface opposite to the surface on which the electrode (cathode) 121, the electrode (anode) 122, and the valve 123 are disposed is disposed on the second surface 4 of the first case 11. Further, the battery cell 12 radiates the most heat from the surface opposite to the surface on which the electrode (cathode) 121 and the electrode (anode) 122 are disposed to the outside.

The disposition of the plurality of battery cells 12 that are received in the battery module 1 will be described below. The battery cell 12 is disposed in one stage in the first direction 5. Further, the battery cell 12 is received in the battery module 1 so that when the battery module 1 is mounted in the battery unit 2, a short direction of the surface on which the electrode (cathode) 121 and the electrode (anode) 122 are disposed corresponds to the height direction (the third direction 7) thereof. In other words, the battery cell 12 is received in the battery module 1 so that when the battery module 1 is mounted in the battery unit 2, a longitudinal direction of the surface on which the electrode (cathode) 121 and the electrode (anode) 122 are disposed corresponds to the horizontal direction (the second direction 6) thereof. The battery cells 12 are disposed in two columns in the second direction 6 and are disposed in twelve columns in the third direction 7. In addition, the number of rows and the number of columns of the battery cells 12 illustrated in FIG. 1 are one example but are not limited thereto. The number of rows and the number of columns of the battery cells 12 can arbitrarily increase and decrease.

The bus bar 13 is a conductor that connects the electrode (cathode) 121 (or electrode (anode) 122) of one battery cell 12 with the electrode (cathode) 121 (or electrode (anode) 122) of another cell 12 to electrically connect between the electrodes of the plurality of battery cells 12.

The CMU substrate 14 serves to control the plurality of battery cells 12, respectively, that is mounted in the battery module 1. The CMU substrate 14 monitors a state (charged and discharged quantity) of the plurality of battery cells 12, respectively, by way of example. Further, the CMU substrate 14 is disposed on the first surface 3 by way of example, but the position of the CMU substrate 14 is not limited thereto. The CMU substrate 14 is preferably not disposed on the second surface 4 in the first direction 5 unlike the plurality of battery cells 12 and may be disposed in the second direction 6 or in the vicinity of the plurality of battery cells 12 in the second direction 6.

According to the above configuration, the battery module 1 radiates the most heat from the second surface 4 of the case 11 to the outside. That is, the second surface 4 of the case 11 has a lower thermal resistance than other surfaces. Meanwhile, the battery module 1 does not radiate the most heat from the first surface 3 of the case to the outside. That is, the first surface 3 of the case 11 has a higher thermal resistance than other surfaces.

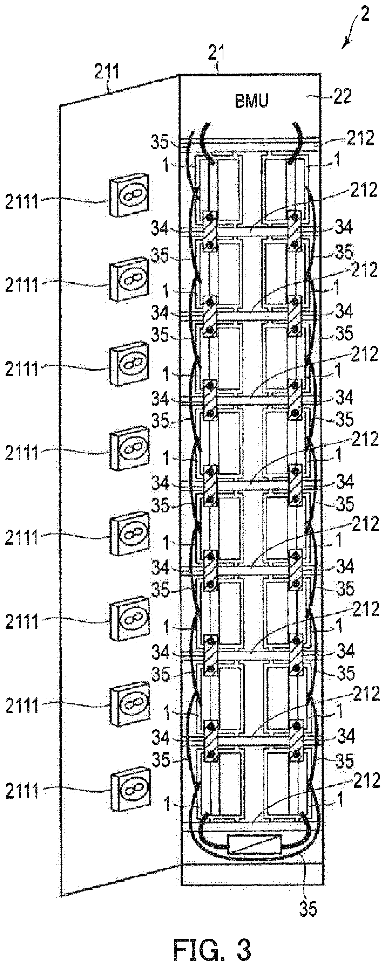

FIG. 3 is a front view of the battery unit 2 in which the plurality of battery modules 1 is mounted. The battery unit 2 includes a chassis 21, a battery management unit (BMU) 22, and other components (terminal for outputting electricity from the battery unit 2 to the outside, and the like) that are not illustrated, in addition to the plurality of battery modules 1 as described above. The chassis 21 receives the plurality of battery modules 1 and the BMU 22. The chassis 21 includes a door 211 and a plurality of recesses 213. The plurality of recesses 213 is provided with a pair of support members 212 and 212 that are disposed in parallel along a longitudinal direction at a predetermined distance.

The door 211 is disposed to be freely opened and closed at a front of the chassis 21. The door 211 is provided with a plurality of fans 2111 that mainly cools the second surface of the plurality of battery modules 1. The fan 2111 performs a cooling function by directly sucking external air in the chassis 21 in the state in which the door 211 is closed and transferring the external air to the second surface 4 of the plurality of battery modules 1. Further, the disposition of the fan 2111 on the door 211 will be described below.

The recess 213 serves to mount the battery module 1 therein. Each recess 213 is configured to have a size enough to insert and extract two battery modules 1 in a horizontal direction. In the chassis 21, the recess 213 is disposed in eight stages in a height direction. Further, the number of rows of the recess 213 that is disposed in the chassis 21 illustrated in FIG. 3 and the number of battery modules 1 that may be mounted in the recess 213 are examples only but are not limited thereto. The number of rows of the recess 213 and the number of battery modules 1 that may be mounted in the recess 213 may arbitrarily increase and decrease. In addition, the mounting of the battery module 1 in the recess 213 will be described below.

The BMU 22 has a function of controlling each of the plurality of battery modules 1 that is mounted in the battery unit 2. As an example, the BMU 22 monitors the state (charged and discharged amount) of each of the plurality of battery modules 1 that is mounted in the battery unit 2. As an example, the BMU 22 is disposed on a top portion of the chassis 21, in the height direction of the chassis 21.

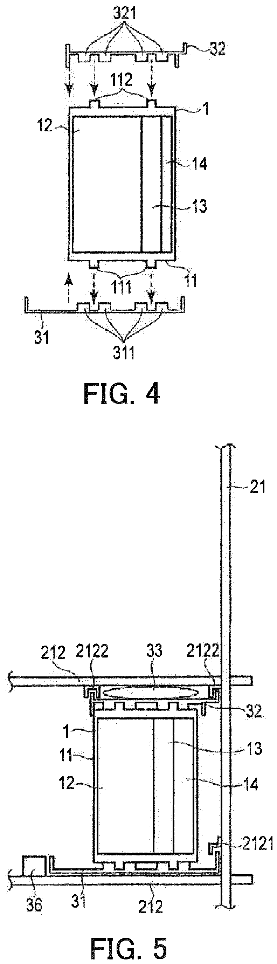

Next, the mounting of the battery module 1 in the recess 213 will be described. FIG. 4 is a diagram schematically illustrating the battery module 1 prior to being mounted in the battery unit 2 and a first tray 31 and a second tray 32 mounted therein.

The first tray 31 is a member that is disposed on a bottom portion of the battery module 1 in the height direction of the battery module 1 when the battery module 1 is mounted in the battery unit 2. The first tray 31 has a saucer shaper covering all the directions. The first tray 31 serves to collect an electrolytic solution (liquid) leaked from the battery unit 2, such that the electrolytic solution is not diffused into the battery unit 2. Further, the first tray 31 is provided with a connected portion 311 that is coupled with projections 111 disposed on the surface of the battery module 1 facing the first tray 31. That is, the connected portion 311 serves to fix (position) the battery module 1 to the first tray 31. Further, the connected portion 311 is configured to push up the battery module 1 in a height direction so that the first tray 31 does not contact the overall surface of the battery module 1 opposite thereto. That is, the first tray 31 partially faces the battery module 1 via an air gap. Therefore, the battery module 1 is efficiently cooled by the fan 2111 since air flows in an air gap between the battery module 1 and the first tray 31 when the battery module 1 is mounted in the battery unit 2.

The second tray 32 is a member that is covered on the top portion of the battery module 1 in the height direction of the battery module 1 when the battery module 1 is mounted in the battery unit 2. The second tray 32 serves to mount a buffer 33 on a surface opposite to a surface that faces the battery unit 2, as described below. Further, the second tray 32 is provided with a connected portion 321 that is coupled with projections 112 disposed on the surface of the battery module 1 facing the second tray 32. That is, the connected portion 321 serves to fix (position) the battery module 1 to the second tray 32. Further, the connected portion 321 is configured to push down the battery module 1 in a height direction so that the second tray 32 does not contact the overall surface of the battery module 1 opposite thereto. That is, the second tray 32 partially faces the battery module 1 via an air gap. Therefore, the battery module 1 is efficiently cooled by the fan 2111 since air flows in the air gap between the battery module 1 and the second tray 32 when the battery module 1 is mounted in the battery unit 2.

FIG. 5 is a partially enlarged front view of the battery unit 2 equipped with the battery module 1 in the state in which the first tray 31 and the second tray 32 are mounted. Further, FIG. 5 illustrates only one battery module 1 and only one recess 213, but the case in which one battery module 1 is mounted in another recess 213 is the same.

The support member 212 includes a first guide 2121 and a second guide 2122. The first guide 2121 is disposed on a bottom portion of the recess 213 in the height direction. The first guide 2121 is engaged with the first tray 31 when the battery module 1 is received in the recess 213. The second guide 2122 is disposed on a top portion of the recess 213 in the height direction. The second guide 2122 is engaged with the second tray 32 when the battery module 1 is received in the recess 213. Therefore, the battery module 1 with which the first tray 31 and the second tray 32 mounted with the buffer 33 are mounted is slid along the first guide 2121 and the second guide 2122 and thus may be received in the recess 213. Further, the first guide 2121 serves to fix (position) the first tray 31 to the recess 213. Similarly, the second guide 2122 serves to fix (position) the second tray 32 to the recess 213. Therefore, the battery module 1 fixed (positioned) to the trays of the first tray 31 and the second tray 32 is fixed (positioned) to the recess 213 by the first guide 2121 and the second guide 2122. For this reason, the position of the battery module 1 does not deviate from the chassis 21 during the transportation of the battery unit 2.

Next, a configuration of the buffer 33 will be described below. The buffer 33 is disposed between the second tray 32 and the support member 212 in the height direction when the battery module 1 is received in the recess 213. The buffer 33 is disposed to contact the recess 213. The buffer 33 is configured to fix the battery unit 2 to the recess 213 by applying a slight pressure to the battery module 1 mounted in the battery unit 2 in the height direction by an air pressure. That is, the buffer 33 serves to mitigate (absorb) vibrations to the battery module 1 even when the battery unit 2 vibrates in the height direction during the transportation of the battery unit 2. An example of the buffer 33 may include an air cushion (balloon), a regulating apparatus (leaf spring, spring, jack, and the like), and the like, but any apparatus showing the foregoing functions may be used and the present invention is not limited thereto.

Further, the position at which the buffer 33 is disposed is not limited to a space between the second tray 32 and the support member 212 in the height direction. The buffer 33 may be disposed between the first tray 31 and the recess 213 in the height direction. In addition, the buffer 33 may be disposed between the first tray 31 and the battery unit 2 in the height direction. Further, the buffer 33 may be disposed between the second tray 32 and the battery unit 2 in the height direction. That is, the buffer 33 is disposed at any one of portions on and below or at both portions of the battery module 1 between the battery module 1 and the recess 213.

Next, the direction of the battery module 1 received in the recess 213 will be described. The battery module 1 is received in the recess 213 so that other battery modules 1 aligned in a horizontal direction face the second surface 4. All the battery modules 1 mounted in the battery unit 2 are received in each recess 213 as described above. That is, the plurality of battery modules 12 are received in each recess 213 so that in connection with one column in the height direction, the first surfaces 3 are aligned to face each other along the height direction and the second surfaces 4 are aligned to face each other along the height direction. Further, in the battery modules 1 facing each other in the horizontal direction, the second surfaces 4 face each other at a predetermined distance. Therefore, in the plurality of battery modules 1 mounted in the chassis 21 in two columns in the height direction, the second surfaces 4 are gathered at a central portion of the chassis 21 and the first surfaces 3 are gathered at an end of the chassis 21 (in the vicinity of the chassis 21). That is, the plurality of battery modules 1 is disposed so that a surface having a lower thermal resistance than those of other surfaces is located on a surface having good ventilation. In addition, the first embodiment describes an example in which in the battery modules 1, the second surfaces 4 face each other at a predetermined distance but is not limited thereto. In the battery module 1, any surfaces (that is, surfaces having a lower thermal resistance than that of the first surface 3 (surfaces through which heat is easily discharged)) other than the first surface 3 may face each other at a predetermined distance.

Next, the disposition of the fan 2111 for cooling the second surface 4 of the battery module 1 will be described. The fan 2111 is disposed at the door 211 so as to cool a central portion of the chassis 21. As an example, the fan 2111 is disposed at the door 211 along a space between the battery modules 1 in two columns formed at the central portion of the chassis 21 along the height direction. Even when the plurality of battery modules 1 is mounted in the chassis 21 in two columns in the height direction, the fan 2111 may efficiently cool the second surfaces 4 of all the battery modules 1 since an airflow passage is secured while the second surfaces 4 are gathered at the central portion of the chassis 21. Further, the number of fans 2111 disposed at the door 211 is arbitrarily determined.

Next, wirings of the battery modules 1 mounted in the battery unit 2 will be described. An output terminal (not illustrated) of any battery module 1 is connected with an output terminal (not illustrated) of another battery module 1 by a bus bar 34. As an example, the output terminal (not illustrated) of the battery module 1 is disposed near the first surface 3 of the case 11. By the configuration, all the battery modules 1 mounted in the battery unit 2 may be electrically connected with each other by simple wirings.

Further, a local area network (LAN) terminal (not illustrated) of any battery module 1 is connected with a LAN terminal (not illustrated) of another battery module 1 by a LAN cable 35. Further, the battery unit 2 received in the recess 213 on a top end in the height direction is connected with the BMU 22 by the LAN cable 35. As an example, the LAN terminal (not illustrated) of the battery module 1 is disposed near the first surface 3 of the case 11. By the configuration, all the battery modules 1 mounted in the battery unit 2 are connected with each other by a network and can be controlled (communicate) by the BMU 22. In all the battery modules 1 mounted in the battery unit 2, since the first surfaces 3 are gathered at an end side of the chassis 21, the wirings of the LAN cables 35 are simple and the LAN cables 35 may be aligned along the surface of the chassis 21.

In addition, although the first embodiment describes the battery unit 2 in which the battery modules 1 in two columns are mounted in the height direction, the first embodiment may also be applied to a battery unit 2 in which the battery modules 1 in one column are mounted in the height direction and a battery unit 2 in which the battery modules 1 in three columns or more are mounted in the height direction. That is, the plurality of battery modules 12 is received in each recess 213 so that in connection with one column in the height direction, the first surfaces 3 are aligned to face each other along the height direction and the second surfaces 4 are aligned to face each other along the height direction.

Further, the battery unit 2 may be additionally connected easily with a battery unit in which battery modules 1 in at least one column are mounted in the height direction configured like the battery unit 2. In addition, the additionally connected battery unit needs not to include the BMU. The battery module mounted in the additionally connected battery unit is electrically connected with the battery module 1 mounted in the battery unit 2, which may be performed only by network-connection using the LAN.

Further, as illustrated in FIG. 5, in the battery unit 2, a liquid absorber 36 (for example, a material used for a paper diaper, and the like) may be disposed (inserted) near a bottom surface (first tray 31) of the battery module 1 within the recess 213. The liquid absorber 36 may be spread under the first tray 31 or over the first tray 31. The liquid absorber 36 may prevent an electrolytic solution from being leaked from the battery module 1 and an electrolytic solution overflowing from the first tray 31 from being scattered into the battery unit 2. In addition, the liquid absorber 36 may be formed of any material that can absorb liquid and therefore, the constituent material thereof is not limited.

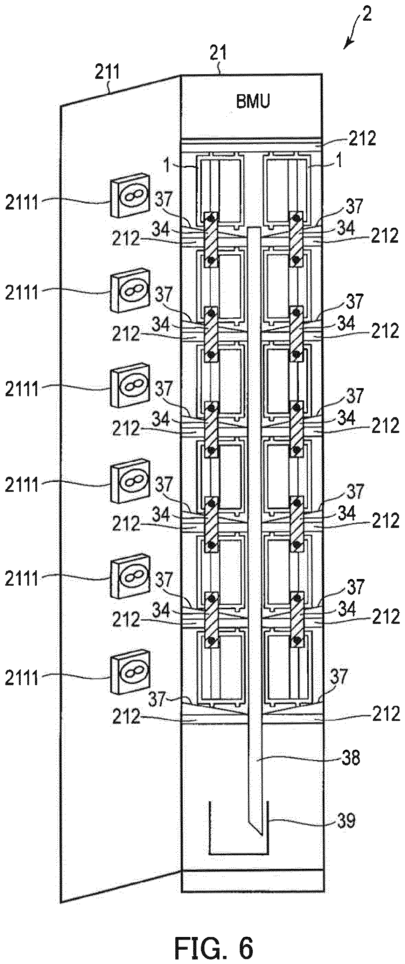

Next, a modification of the battery unit 2 according to the first embodiment will be described below. FIG. 6 is a front view of a battery unit 2. The battery unit 2 includes a third tray 37. For one battery unit 2, one third tray 37 is disposed. The third tray 37 is disposed between the bottom surface (in detail, the bottom surface of the first tray 31) of the battery module 1 and the recess 213. The third tray 37 includes an inclined surface from the end side (near the chassis 21) of the chassis 21 to the central portion thereof. All the third trays 37 include the same inclined surface. Further, the battery unit 2 includes a pipe 38 that is disposed at the central portion of the chassis 21 along the height direction. The pipe 38 is connected with each first tray 31. Further, the battery unit 2 includes a receiver 39 at a position facing an end of the pipe 38 as the bottom portion in the height direction. According to the foregoing configuration, even when the electrolytic solution is leaked from the plurality of battery modules 1, the receiver 39 may gather the electrolytic solution flowing through the third tray 37 and the pipe 38 in one place. Therefore, it is possible to prevent the leaked electrolytic solution from staying in the vicinity of the battery module 1.

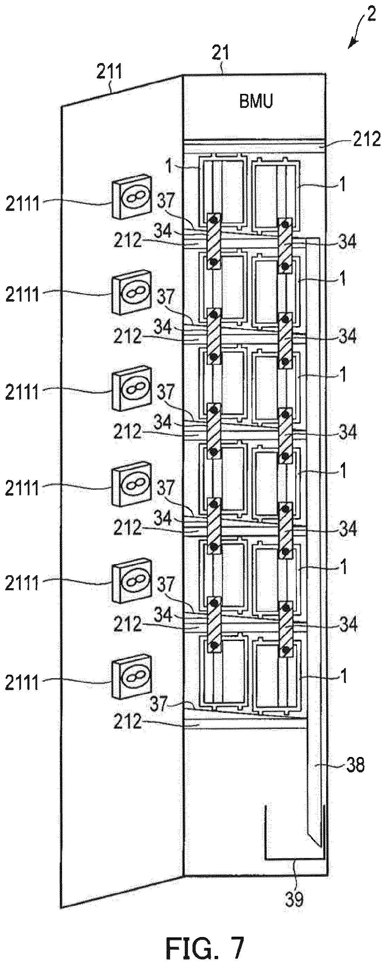

Next, another modification of the battery unit 2 according to the first embodiment will be described. FIG. 7 is a front view of a battery unit 2. The third tray 37, the pipe 38, and the receiver 39 may be disposed as follows. For two battery units 2 received in the recess 213, one third tray 37 is disposed. The third tray 37 is disposed between the bottom surface (in detail, the bottom surface of the first tray 31) of the battery module 1 and the recess 213. The third tray 37 includes an inclined surface from one end to the other end in a direction (horizontal direction) orthogonal to the height direction, that is, a direction in which the battery units 2 are aligned. All the third trays 37 that are disposed in each recess 213 include the same inclined surface. The pipe 38 is disposed near the case 11 along the height direction, as the end that becomes the lower portion in the height direction between both ends of the third tray 37. The pipe 38 is connected with the end of each first tray 31. Further, the receiver 39 is disposed to face the end of the pipe 38, as the lower portion in the height direction. According to the foregoing configuration, even when the electrolytic solution is leaked from the plurality of battery modules 1, the receiver 39 may gather the electrolytic solution in one place.

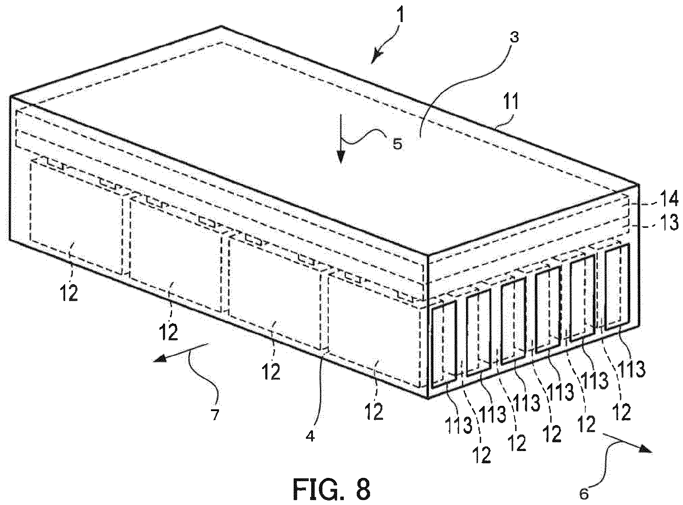

Next, the modification of the battery unit 1 according to the first embodiment will be described. FIG. 8 is a perspective view schematically illustrating the modification of the battery module 1 according to the first embodiment of the present invention. The battery cell 12 is disposed in one stage in the first direction 5. Further, the battery cell 12 is received in the battery module 1 so that when the battery module 1 is mounted in the battery unit 2, a longitudinal direction of the surface on which the electrode (cathode) 121 and the electrode (anode) 122 are disposed corresponds to the height direction (the third direction 7) thereof. In other words, the battery cell 12 is received in the battery module 1 so that when the battery module 1 is mounted in the battery unit 2, a lateral direction of the surface on which the electrode (cathode) 121 and the electrode (anode) 122 are disposed corresponds to the horizontal direction (the second direction 6) thereof. The battery cells 12 are disposed in six columns in the second direction 6 and are disposed in four columns in the third direction 7. Further, the number of rows and the number of columns of the battery cells 12 illustrated in FIG. 8 are an example and therefore, not limited thereto. The number of rows and the number of columns of the battery cell 12 can arbitrarilyincrease and decrease.

Further, the case 11 includes a vent hole 113 that is disposed on a surface (surface including the first direction 5 and the second direction 6) that becomes the upper portion in the height direction when the battery module 1 is mounted in the battery unit 2. The vent hole 113 is disposed in the case 11 so as to face the battery cell 12 in the third direction 7. In addition, the vent hole 113 may be disposed in the case 11 so as to partially face the battery cell 12 or so as not to face the battery cell 12, in the third direction. Further, the vent hole 113 may be disposed on another surface (for example, second surface 4) of the case 11. In addition, the number and positions of vent holes 113 disposed per one surface of the case 11 may be arbitrarily changed.

By mounting the vent hole 113 in the case 11, the battery module 1 mounted in the battery unit 2 may effectively radiate heat from the inside of the case 11 to the outside through the vent hole 113 according to the cooling by the fan 2111. Further, although the disposition of the vent hole 113 is, for example, described with reference to the battery module 1 illustrated in FIG. 8, the vent hole 113 may be mounted in the case 11 of the battery module 1 illustrated in FIG. 1.

According to the first embodiment, the battery unit 2 in which the battery module 1 of which the battery cell 12 is transversely is mounted is provided for an anti-vibration measure (anti-shock vibration). For this reason, the battery unit 2 avoids a risk of the leakage of the electrolytic solution from the battery module 1 and is transportable by a vehicle, such as a truck, and the like, in the state in which the battery module 1 is mounted. Further, since the battery unit 2 is mounted with the battery module 1 in advance at the time of transportation, such that the battery unit 2 is easily transported and needs not to be assembled on the spot. Further, the battery module 1 may remove unnecessary components (for example, a metal frame required in the related art, and the like) by changing the disposition of the battery module 1 from the related art.

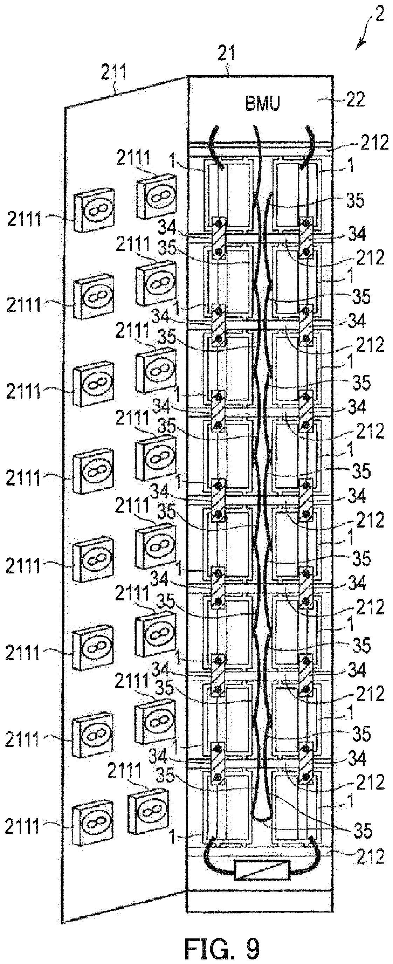

Next, a second embodiment will be described below. FIG. 9 is a front view of the battery unit 2 in which the plurality of battery modules 1 according to the second embodiment. The same components as the first embodiment are denoted by the same reference numerals and therefore, the description thereof will be omitted. The second embodiment is different from the first embodiment, mainly, in terms of the direction of the battery module 1 received in the recess 213 and the disposition of the cooling fan 2111 at the door 211.

The battery module 1 is received in the recess 213 so that other battery modules 1 aligned in a horizontal direction face the first surface. All the battery modules 1 mounted in the battery unit 2 are received in each recess 213 as described above. That is, the plurality of battery modules 12 is received in each recess 213 so that in connection with one column in the height direction, the first surfaces 3 are aligned to face each other along the height direction and the second surfaces 4 are aligned to face each other along the height direction. Further, in the battery modules 1 facing each other in the horizontal direction, the first surfaces 3 face each other at a predetermined distance. Therefore, in the plurality of battery modules 1 mounted in the chassis 21 in two columns in the height direction, the first surfaces 3 are gathered at a central portion of the chassis 21 and the second surfaces 4 are gathered at an end (in the vicinity of the chassis 21) of the chassis 21.

Next, the disposition of the fan 2111 for cooling the second surface 4 of the battery module 1 will be described. The fans 2111 are, for example, disposed in two columns in the height direction so as to face the second surface 4 of the battery module 1. Further, the number of fans 2111 disposed at the door 211 is arbitrarily determined.

Further, the battery modules 1 mounted in the battery unit 2 are connected with each other by the bus bar 34, like the first embodiment. In addition, the battery modules 1 mounted in the battery unit 2 are connected with each other by the LAN cable 35 (not illustrated), like the first embodiment. In all the battery modules 1 mounted in the battery unit 2, since the first surfaces 3 are gathered at the central portion of the chassis 21, the wirings of the LAN cables 35 are simple and the LAN cables 35 may be aligned at the central portion of the chassis 21. Further, although the second embodiment describes the battery unit 2 in which the battery modules 1 in two columns are mounted in the height direction, the second embodiment may be likewise applied to the battery unit 2 in which the battery modules 1 in at least three columns are mounted in the height direction. The second embodiment may obtain the same effect as the first embodiment.

In addition, the battery unit 1 described in the present embodiment can be applied to a vehicle apparatus such as a car, in addition to a stationary.

Several embodiments of the present invention are described but these embodiments are proposed by way of example and are not construed as limiting the scope of the present invention. These new embodiments can be made in various forms and can be variously omitted, substituted, and changed without departing from the scope of the present invention, the invention being defined by the appended claims.

## Claims

1. A battery unit, comprising;
battery modules (1) that include battery cells (12) having electrodes (121, 122), and a case (11) having a first surface (3) and a second surface (4) facing the first surface (3), the battery cell (12) being received in the case (11) so that the electrode (121, 122) faces the first surface (3); and
a chassis (21) having a plurality of recesses (213) that is formed by disposing a pair of support members (212, 212) in parallel along one direction at a predetermined distance,
**characterized in that** the plurality of battery modules (1) are received in the plurality of recesses (213) to form at least a first battery module column and a second battery module column, the first battery module column has the first surface (3) and the second surface (4) having a lower thermal resistance than that of the first surface (3) and the second battery module column has the first surface (3) and the second surface (4) having a lower thermal resistance than that of the first surface (3), and the second surfaces (4) of the first battery module column and the second battery column face each other at a predetermined distance to form a space;
a door (211) that is provided to the freely opened and closed at a front of the chassis (21); and
a fan (2111) that is provided at the door (211) along the space between the first battery module column and the second battery module column.

2. The battery unit according to claim 1, further comprising:
a buffer (33) disposed between the support member (212) and the battery module (1).

3. The battery unit according to claim 1, wherein the battery module (1) includes bus bars (13) that connect the electrodes (121, 122) of the plurality of battery cells (12) with each other and a control substrate (14) that controls the battery cells (12).

4. The battery unit according to claim 1, wherein the case (11) has a vent hole (113).

5. The battery unit according to claim 1, wherein the chassis (21) has a portrait shape extending in a vertical direction and the plurality of battery modules (1) are received in the plurality of recesses (213) so that the first surface (3) of the case (11) is aligned in a longitudinal direction.

## Patentansprüche

1. Batterieeinheit, die Folgendes umfasst:
Batteriemodule (1), die Batteriezellen (12), die Elektroden (121, 122) aufweisen, und einen Kasten (11) umfassen, der eine erste Fläche (3) und eine zweite Fläche (4) aufweist, die der ersten Fläche (3) zugewandt ist, wobei die Batteriezelle (12) derart in dem Kasten (11) aufgenommen ist, dass die Elektrode (121, 122) der ersten Fläche (3) zugewandt ist; und
ein Gestell (21), das mehrere Vertiefungen (213) aufweist, die durch paralleles Anordnen eines Paares von Unterstützungselementen (212, 212) entlang einer Richtung in einem vorbestimmten Abstand gebildet sind,
**dadurch gekennzeichnet, dass** die mehreren Batteriemodule (1) in den mehreren Vertiefungen (213) aufgenommen sind, um mindestens eine erste Batteriemodulsäule und eine zweite Batteriemodulsäule zu bilden, wobei die erste Batteriemodulsäule die erste Fläche (3) und die zweite Fläche (4) aufweist, die einen Wärmeleitwiderstand aufweist, der niedriger ist als derjenige der ersten Fläche (3), und die zweite Batteriemodulsäule die erste Fläche (3) und die zweite Fläche (4) aufweist, die einen Wärmeleitwiderstand aufweist, der niedriger ist als derjenige der ersten Fläche (3), und die zweiten Flächen (4) der ersten Batteriemodulsäule und der zweiten Batteriemodulsäule einander mit einem vorbestimmten Abstand zugewandt sind, um einen Raum zu bilden;
eine Tür (211), die bereitgestellt ist, um an einer Vorderseite des Gestells (21) frei geöffnet und geschlossen zu werden; und einen Lüfter (2111), der an der Tür (211) entlang des Raums zwischen der ersten Batteriemodulsäule und der zweiten Batteriemodulsäule bereitgestellt ist.

2. Batterieeinheit nach Anspruch 1, die ferner Folgendes umfasst:
einen Puffer (33), der zwischen dem Unterstützungselement (212) und dem Batteriemodul (1) bereitgestellt ist.

3. Batterieeinheit nach Anspruch 1, wobei das Batteriemodul (1) Sammelschienen (13), die die Elektroden (121, 122) der mehreren Batteriezellen (12) miteinander verbinden, und ein Steuersubstrat (14) umfasst, das die Batteriezellen (12) steuert.

4. Batterieeinheit nach Anspruch 1, wobei der Kasten (11) ein Lüftungsloch (113) aufweist.

5. Batterieeinheit nach Anspruch 1, wobei das Gestell (21) eine Hochformatform aufweist, die sich in eine vertikale Richtung erstreckt, und die mehreren Batteriemodule (1) derart in den mehreren Vertiefungen (213) aufgenommen sind, dass die erste Fläche (3) des Kastens (11) in einer Längsrichtung ausgerichtet ist.

## Revendications

1. Unité de batterie, comprenant :
des modules de batterie (1) qui comprennent des cellules de batterie (12) comportant des électrodes (121, 122), et un boîtier (11) comportant une première surface (3) et une deuxième surface (4) faisant face à la première surface (3), la cellule de batterie (12) étant reçue dans le boîtier (11) de sorte que l'électrode (121, 122) fasse face à la première surface (3) ; et
un châssis (21) comportant une pluralité d'évidements (213) constitués en disposant une paire d'organes de support (212, 212) en parallèle dans un sens à une distance prédéterminée,
**caractérisée en ce que** la pluralité de modules de batterie (1) sont reçus dans la pluralité d'évidements (213) pour constituer au moins une première colonne de modules de batterie et une deuxième colonne de modules de batterie, la première colonne de modules de batterie comporte la première surface (3) et la deuxième surface (4) présentant une résistance thermique inférieure à celle de la première surface (3) et la deuxième colonne de modules de batterie comporte la première surface (3) et la deuxième surface (4) présentant une résistance thermique inférieure à celle de la première surface (3), et les deuxièmes surfaces (4) de la première colonne de modules de batterie et de la deuxième colonne de modules de batterie se font face l'une à l'autre à une distance prédéterminée pour constituer un espace ;
une porte (211) qui est prévue pour être librement ouverte et fermée à un avant du châssis (21) ; et
un ventilateur (2111) qui est prévu à la porte (211) le long de l'espace entre la première colonne de modules de batterie et la deuxième colonne de modules de batterie.

2. Unité de batterie selon la revendication 1, comprenant en outre :
un tampon (33) disposé entre l'organe de support (212) et le module de batterie (1).

3. Unité de batterie selon la revendication 1, dans laquelle le module de batterie (1) comprend des barres omnibus (13) qui raccordent les électrodes (121, 122) de la pluralité de cellules de batterie (12) l'une à l'autre et un substrat de commande (14) qui commande les cellules de batterie (12).

4. Unité de batterie selon la revendication 1, dans laquelle le boîtier (11) comprend un trou d'évent (113).

5. Unité de batterie selon la revendication 1, dans laquelle le châssis (21) présente une forme en portrait s'étendant dans un sens vertical et la pluralité de modules de batterie (1) sont reçus dans la pluralité d'évidements (213) de sorte que la première surface (3) du boîtier (11) soit alignée dans un sens longitudinal.
